# EUROPEAN PATENT APPLICATION

(11) **EP 3 941 149 A1**
(43) Date of publication of application: **19.01.2022**
(21) Application number: 19920119.5
(22) Date of filing: 15.03.2019
(51) Int. Cl.: H04W 74/08

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: TAKEDA, Kazuki, Tokyo 100-6150 (JP); HARADA, Hiroki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/010949
(87) International publication number: WO 2020/188653

(57) **Abstract**

To appropriately perform communication even when the random access procedure is performed with fewer steps than the existing case, one aspect of a user terminal of the present disclosure includes a control section that controls transmission of a first message in a 2-step random access procedure by using an uplink shared channel, and a receiving section that receives a second message transmitted in response to the UL signal.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, LTE Rel. 8 to Rel. 13), the user terminal (UE: User Equipment) controls reception of a downlink shared channel (for example, Physical Downlink Shared Channel (PDSCH)), based on Downlink Control Information ((DCI) also referred to as DL assignment and so on) from a radio base station. The UE controls transmission of an uplink shared channel (for example, (Physical Uplink Shared Channel (PUSCH)), based on the DCI (also referred to as UL grant and so on).

In the existing LTE system, UL data can be transmitted from the user terminal when UL synchronization is established between the radio base station and the user terminal. Thus, in the existing LTE system, a random access procedure (also referred to as RACH procedure: Random Access Channel Procedure, access procedure) for establishing the UL synchronization is supported.

In the random access procedure of the existing LTE system, 4-step (messages 1 to 4) is supported. For example, in the random access procedure, the user terminal transmits a random access preamble (PRACH) corresponding to message 1 to a base station, and acquires information on a transmission timing of the UL by a response signal (random access response or message 2) from the radio base station in response to the PRACH. Thereafter, the user terminal transmits a message (message 3) on the uplink shared channel, based on the information acquired in message 2, and then receives message 4 (also referred to as contention-resolution) transmitted from the base station.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR, 5G, 5G+, Rel. 16 or later versions), consideration is being made to perform communication using beam forming (BF). For example, it is assumed that the UE and the base station use at least either a plurality of transmission/reception points or a plurality of beams to transmit and/or receive signals (or channels).

In the future radio communication systems, it is also conceivable that the random access procedure is performed with fewer steps (for example, 2-step) than the existing 4-step.

However, in future radio communication systems, how to control the random access procedure that use less steps than the existing 4-step is a problem, but specific operations and so on are not sufficiently considered. If the random access procedure is not appropriately performed, quality of communication may degrade.

The present disclosure has been made in view of such points, and it is one object of the present disclosure to provide a user terminal and a radio communication method capable of appropriately performing communication even when performing the random access procedure with fewer steps than the existing case.

### Solution to Problem

A user terminal according to one aspect of the present disclosure includes a control section that controls transmission of a first message in a 2-step random access procedure by using an uplink shared channel, and a receiving section that receives a second message transmitted in response to the UL signal. Advantageous Effects of Invention

According to one aspect of the present disclosure, the communication can be appropriately performed even when performing a random access procedure with fewer steps than the existing case.

### Brief Description of Drawings

FIG. 1 is a diagram to show an example of a 4-step RACH;
FIG. 2 is a diagram to show an example of a 2-step RACH;
FIG. 3 is a diagram to show an example of a 2-step RACH according to a first aspect;
FIG. 4 is a diagram to show another example of the 2-step RACH according to the first aspect;
FIG. 5 is a diagram to show an example of a 2-step RACH according to a second aspect;
FIG. 6 is a diagram to show an example of a 2-step RACH according to a third aspect;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

Existing LTE systems (for example, LTE Rel. 8 to Rel. 13) support a random access procedure for establishing UL synchronization. The random access procedure includes a contention-based random access (also referred to as CBRA and so on), and a non-contention-based random access (also referred to as Non-CBRA, contention-free random access (CFRA) and so on).

In the contention-based random access (CBRA), the user terminal transmits a preamble randomly selected from a plurality of preambles (random access preamble, random access channel (also referred to as Physical Random Access Channel (PRACH), RACH preamble and so on) determined for each cell. The contention-based random access is a user terminal-initiated random access procedure, and can be used, for example, at the time of initial access, at the time of start or resuming of UL transmission, and so on.

In the non-contention-based random access (Non-CBRA, CFRA, on the other hand, the radio base station allocates a preamble specific to a user terminal by a downlink (DL) control channel (Physical Downlink Control Channel (PDCCH)), and the user terminal transmits the preamble allocated from the radio base station. The non-contention-based random access is a network-initiated random access procedure, and can be used, for example, at the time of handover, at the time of start or resuming of DL transmission (start or resuming of transmission of DL retransmission indicating information) in the UL and so on.

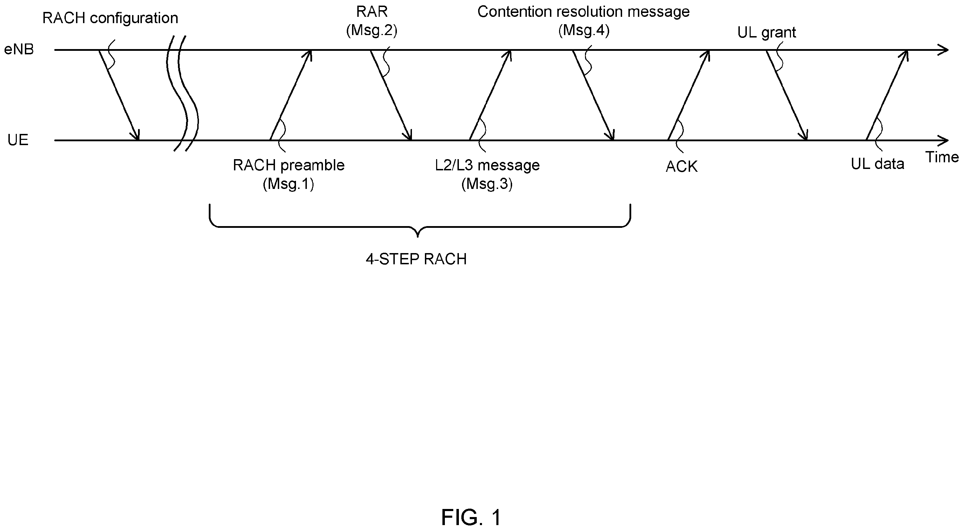

FIG. 1 is a diagram to show one example of a contention-based random access. In FIG. 1, the user terminal receives, in advance, information (PRACH configuration information) indicating configuration of the random access channel (PRACH) (PRACH configuration, RACH configuration) by system information (for example, MIB (Master Information Block), and/or SIB (System Information Block)) and higher layer signaling (for example, RRC (Radio Resource Control) signaling).

The PRACH configuration information can indicate, for example, a plurality of preambles (for example, preamble format) determined for each cell, an offset (prach-FrequencyOffset) indicating a start position of time resource (for example, system frame number, subframe number) and frequency resource (for example, 6 resource blocks (PRB: Physical Resource Block) used for the PRACH transmission and so on.

As shown in FIG. 1, in a case that the user terminal transitions from an idle (RRC_IDLE) state to an RRC connected (RRC_CONNECTED) state (for example, at the time of initial access), a case that the user terminal is in the RRC connected state but the UL synchronization is not established (for example, at the time of start or resuming of UL transmission), and so on, the user terminal randomly selects one of a plurality of preambles indicated by the PRACH configuration information, and transmits the selected preamble on the PRACH (message 1).

When the preamble is detected, the radio base station transmits a random access response (RAR) as a response (message 2). When failing to receive the RAR within a given period (RAR window) after the transmission of the preamble, the user terminal increases the transmit power of the PRACH and transmits (retransmits) the preamble again. Note that increasing the transmit power at the time of retransmission is also referred to as power ramping.

The user terminal that has received the RAR adjusts the transmission timing of the UL to establish the UL synchronization, based on a timing advance (TA) included in the RAR. The user terminal transmits a control message of a higher layer (L2/L3; Layer 2/Layer 3) in a UL resource specified by the UL grant included in the RAR (message 3). The control message includes a user terminal identifier (UE-ID). The user terminal identifier may be, for example, a C-RNTI (Cell-Radio Network Temporary Identifier) in the RRC connected state, or may be an UE-ID of a higher layer such as S-TMSI (System Architecture Evolution-Temporary Mobile Subscriber Identity) in the idle state.

The radio base station transmits a contention resolution message according to a control message of a higher layer (message 4). The contention resolution message is transmitted based on destination indicating a user terminal identifier included in the control message. The user terminal successfully detecting the contention resolution message transmits a positive response (ACK: Acknowledge) in the HARQ (Hybrid Automatic Repeat reQuest) to the radio base station. With this configuration, the user terminal in the idle state transitions to the RRC connected state.

On the other hand, the user terminal that fails to detect the contention resolution message determines that collision occurs, re-selects a preamble, and repeats the random access procedure using messages 1 to 4. When detecting that the collision is solved by the ACK from the user terminal, the radio base station transmits UL grant to the user terminal. The user terminal starts the UL data using the UL resource allocated by the UL grant.

In the contention-based random access as described above, the user terminal can start the random access procedure autonomously when desiring transmission of the UL data. Since the UL data is transmitted using the UL source allocated uniquely to the user terminal by the UL grant after the UL synchronization is established, highly reliable UL transmission is possible.

In NR, it is studied to perform the random access procedure using fewer steps than the existing 4-step. By way of example, a random access procedure using 2-step is proposed. The random access procedure using 2-step is also referred to as 2-step random access procedure, RACH with 2-step, or 2-step RACH.

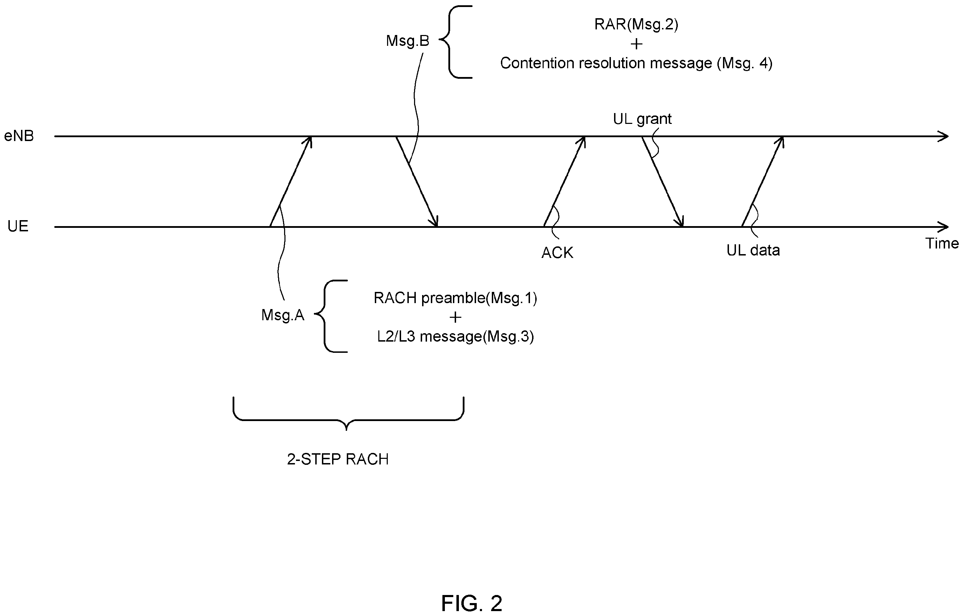

The 2-step RACH may be configured by a first step in which transmission is performed from the UE to the base station, and a second step in which transmission is performed from the base station to the UE (see FIG. 2).

For example, in the first step, at least one of the UL signal and the UL channel (hereinafter also written as UL signal/UL channel) including a preamble and a message may be transmitted from the UE to the base station. The preamble may be configured to have a similar role as message 1 (PRACH) in the existing random access procedure. The message may be configured to have a similar role as message 3 (PUSCH) in the existing random access procedure. Note that the message transmitted in the first step may be referred to as message A (Msg. A) or a first message.

In the second step, at least one of the DL signal and the DL channel (hereinafter also written as DL signal/DL channel) including a response and a contention resolution (contention-resolution) may be transmitted from the base station to the UE. The response may be configured to have a similar role as message 2 in the existing random access procedure (random access response (RAR) transmitted in the PDSCH). The contention resolution may be configured to have a similar role as message 4 (PDSCH) in the existing random access procedure. Note that the message transmitted in the second step may be referred to as message B (Msg. B) or a second message.

Thus, how to control transmission/reception when performing the random access procedure using fewer number of steps than the existing LTE system is a problem.

In NR, it is assumed that dynamic grant-based transmission and configured grant-based transmission are supported.

The dynamic grant-based transmission is a UL transmission using an uplink shared channel (for example, PUSCH (Physical Uplink Shared Channel)) based on downlink control information (DCI) (UL grant) or a DL transmission using a downlink shared channel (for example, PDSCH (Physical Downlink Shared Channel)) based on DCI (DL assignment).

The configured grant-based transmission is a UL transmission using the uplink shared channel (for example, PUSCH) based on the configuration information (which may also be referred to as, for example, configured grant, configured UL grant and so on) configured by a higher layer, or a DL transmission using the downlink shared channel (for example, PDSCH) based on the configuration information (for example, sps-config) configured by the higher layer.

The configured grant-based transmission can be expected to realize low latency communication as the UL resource is already allocated with respect to the UE, and the UE can autonomously perform UL transmission using the configured resource.

The dynamic grant-based transmission may be referred to as dynamic grant-based PUSCH, UL transmission with dynamic grant, PUSCH with dynamic grant, UL transmission with UL grant, UL grant-based transmission, UL transmission scheduled by the dynamic grant (configured with transmission resource), and so on.

The configured grant-based transmission may be referred to as configured grant-based PUSCH, UL transmission with configured grant, PUSCH with configured grant, UL transmission without UL grant, UL grant-free transmission, UL transmission scheduled by the configured grant (configured with transmission resource), and so on.

The configured grant-based DL transmission may also be referred to as Semi-Persistent Scheduling (SPS). The configured grant-based UL transmission may also be referred to as UL SPS. In the present disclosure, the "configured grant" may be interchangeably interpreted as "SPS", "SPS/configured grant" and so on.

Some types (type 1, type 2, and so on) of configured grant-based transmission are being studied.

In the configured grant type 1 transmission (type 1 configured grant), a parameter used in the configured grant-based transmission (which may be referred to as configured grant-based transmission parameter, configured grant parameter, and so on) is configured for the UE by using only the higher layer signaling.

In the configured grant type 2 transmission (type 2 configured grant), the configuration information for the configured grant (parameter, configured grant parameter) is configured for the UE by the higher layer signaling. In the configured grant type 2 transmission, at least a part of the configured grant parameter may be notified to the UE by physical layer signaling (for example, activation downlink control information (DCI) described later).

The configured grant parameter may be configured for the UE by using information element "ConfiguredGrantConfig" of the higher layer (for example, RRC). The configured grant parameter may include, for example, information identifying a configured grant resource. The configured grant parameter may include, for example, an index of the configured grant, a time offset, periodicity, the number of repetitions (repeated transmissions) (the number of repetitions may be expressed as K) of a transport block (TB), a redundancy version (RV) sequence used in the repetition, information related to the timer described above and so on.

Here, the periodicity and the time offset may be expressed with a symbol, slot, subframe, frame and so on. The periodicity may be indicated by, for example, a given number of symbols. The time offset may be indicated by, for example, an offset with respect to the timing of a given index (slot number = 0 and/or system frame number = 0, or the like). The number of repetitions may be an arbitrary integer, and may be, for example, 1, 2, 4, 8 and so on. When the number of repetitions is n(>0), the UE may perform configured grant-based PUSCH transmission to transmit a given TB by using n transmission occasions.

When the configured grant type 1 transmission is configured, the UE may determine that one or a plurality of configured grants are triggered. The UE may perform the PUSCH transmission without dynamic grant using the resource for the configured grant-based transmission that is configured (also referred to as configured grant resource, transmission occasion and so on). Note that even when the configured grant-based transmission is configured, the UE may skip the configured grant based transmission if there are no data in the transmission buffer.

When the UE is configured with the configured grant type 2 transmission and is notified of a given activation signal, the UE may determine that one or a plurality of configured grants are triggered (or activated). The given activation signal (for example, activation DCI) may be DCI (PDCCH) CRC (Cyclic Redundancy Check) scrambled by a given identifier (for example, CS-RNTI: Configured Scheduling Radio Network Temporary Identifier). Note that the DCI may be used to control deactivation, retransmission and so on of the configured grant.

The UE may determine whether to perform the PUSCH transmission using the configured grant resource configured by the higher layer, based on the given activation signal described above. The UE may release (may also be referred to as deactivate, and so on) the resource (PUSCH) corresponding to the configured grant, based on the DCI for deactivating the configured grant or expiration of a given timer (elapse of a given time).

The UE may perform the PUSCH transmission without dynamic grant by using the resource for activated configured grant-based transmission (also referred to as configured grant resource, transmission occasion, and so on). Note that even when the configured grant-based transmission is activated (in active state), the UE may skip the configured grant-based transmission if there are no data in the transmission buffer.

Note that the dynamic grant and the configured grant may be respectively referred to as actual UL grant or DL assignment. Specifically, the actual UL grant may be higher layer signaling (for example, information element (IE), "ConfiguredGrantConfig"), physical layer signaling (for example, given activation signal) or a combination of these.

The inventors of the present invention focused on a fact that the configured grant-based PUSCH to which the UL resource is allocated and in which the UE can autonomously perform the UL transmission can be applied to the random access procedure, and came up with the idea of transmitting message A in the 2-step random access procedure by using the PUSCH.

Hereinafter, the present embodiment will be described in detail with reference to the drawings. Each aspect shown below may be applied alone, or may be performed in combination as appropriate. In the following description, a case where message A includes Msg. 1 (or information corresponding to Msg. 1) and Msg. 3 (or information corresponding to Msg. 3) of the 4-step RACH, and message B includes Msg. 2 (or information corresponding to Msg. 2) and Msg. 4 (or information corresponding to Msg. 4) of the 4-step RACH will be described, but this is not the sole case.

The following contents may be applied to both the 2-step contention-based random access procedure and the 2 step non-contention-based random access procedure. When the 2-step RACH is applied to the non-contention-based random access procedure, a step (0th step) in which the DL signal indicating (or triggering) the transmission of message A is notified to the UE may be configured before the first step.

### (First Aspect)

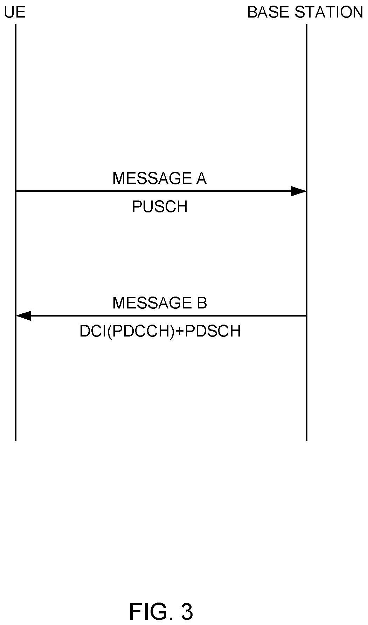

In a first aspect, message A is transmitted using the PUSCH in the 2-step random access procedure (see FIG. 3).

The UE may transmit message A to the network (for example, base station) as a transport block in the PUSCH (or included in the transport block). The UE receives message B as a response signal with respect to message A.

For example, the UE transmits message A on the PUSCH by using the resource configured in advance from the base station. The resource utilized for the transmission of the PUSCH may be configured for the UE by using the higher layer signaling, and so on. The UE may transmit message A by using the PUSCH without an indication by the DCI, similar to the configured grant type 1.

Alternatively, the UE may transmit message A on the PUSCH by using a resource activated by the DCI, similar to the configured grant type 2.

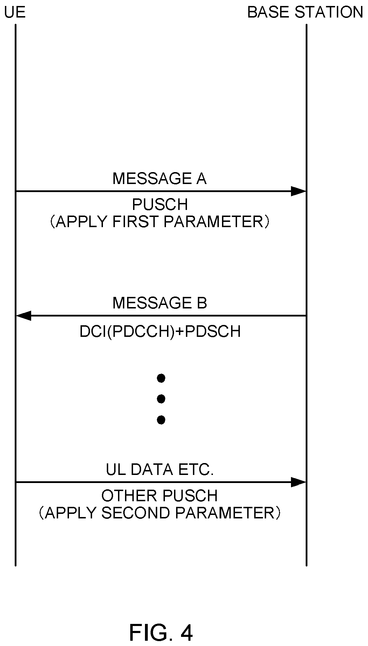

A given parameter may be configured for the PUSCH used in the transmission of message A. The parameter configured for the PUSCH used in the transmission of message A may be configured to be independent from the parameter configured for another PUSCH. For example, a parameter (first parameter) for the PUSCH used in the transmission of message A and a parameter (second parameter) for another PUSCH may be separately configured (see FIG. 4).

Another PUSCH may include at least one of the PUSCH that is not used in the transmission of message A (or does not include message A) and the PUSCH scheduled by the UL grant (e.g., RAR UL grant). The PUSCH that is not used in the transmission of message A (or not including message A) may be a configured grant-based

### PUSCH.

Alternatively, at least one of the number of parameters and the content of the parameter configured with respect to the PUSCH used in the transmission of message A may be different from the configuration configured with respect to another PUSCH.

At least one of the following parameters (for example, higher layer parameter) may be configured with respect to the PUSCH used in the transmission of message A. The following parameters may be configured based on the higher layer signaling (for example, RRC signaling or system information), and so on.
(1) DMRS configuration related parameters
(2) MCS related parameters
(3) Waveform related parameters
(4) Resource allocation related parameters
(5) Power control related parameters

The DMRS (demodulation reference signal) configuration related parameter may be at least one of a parameter (for example, DMRS-UplinkConfig) used for the configuration of the PUSCH demodulation reference signal and a parameter (for example, dmrs-SeqInitialization) related to the sequence of the DMRS.

The DMRS-UplinkConfig may be a parameter including at least one of a DMRS type (dmrs-Type), an additional position of the DMRS (dmrs-AdditionalPosition), a maximum length (maxLength) of the DMRS, a scrambling ID when transform precoding is not applied, and an identifier of nPUCCH when transform precoding is applied. The dmrs-SeqInitialization may be a parameter used in the DMRS sequence and selected from 0 or 1.

The MCS (Modulation and Coding Scheme) related parameter may be at least one of a parameter (mcs-Table) related to a table type applied to the PUSCH transmission, and a parameter (mcsAndTBS) related to a modulation scheme, a target code rate, and a transport block size.

The waveform related parameter may be a parameter (transformPrecoder) for notify whether to apply the transform precoder that is to be applied to the PUSCH.

The resource allocation related parameter may be at least one of a parameter related to the resource allocation type (resourceAllocation), a parameter related to configuration of the RGB size to apply to the PUSCH (rbg-Size), a parameter related to start position, length, and mapping type of the PUSCH (timeDomainAllocation), parameter related to frequency domain resource allocation (frequencyDomainAllocation), and a parameter related to an offset of intra-slot frequency hopping (frequencyHoppingOffset).

The power control related parameter may be at least one of a parameter (powerControlLoopToUse) related to the power control of the PUSCH of closed loop (Closed control loop), a parameter (p0-PUSCH-Alpha) related to an index of a transmit power parameter (P0-PUSCH-AlphaSet), and a parameter related to a resource index of the SRS (srs-ResourceIndicator).

By way of example, as the MCS (Modulation and Coding Scheme) related parameter, the MCS table in which the maximum modulation scheme is 64QAM may be configured for the PUSCH used in the transmission of message A, and the MCS table (in which qam256 is configure with respect to the higher layer parameter mcs-Table or mcs-TableTransformPrecoder for PUSCH) in which the maximum modulation scheme is 256QAM may be configured for another PUSCH. The MCS table in which the maximum modulation scheme is 64QAM may be implemented by not configuring a value or by configuring qam64LowSE for the higher layer parameter mcs-Table or mcs-TableTransformPrecoder with respect to the PUSCH. The MCS table in which the maximum modulation scheme is 256QAM may be implemented by configuring qam256 for the higher layer parameter mcs-Table or mcs-TableTransformPrecoder with respect to the PUSCH.

Thus, the parameter configured for the PUSCH used in the transmission of message A is configured independent of the parameter configured for another PUSCH (for example, PUSCH not used in the transmission of message A). The PUSCH used for the random access procedure thus can be flexibly configured, so that the transmission of message A using the PUSCH can be appropriately performed.

In the random access procedure in the initial connecting operation, message A may be transmitted using the PUSCH. In this case, parameter information of the PUSCH used in the transmission of message A may be included in the system information to notify the UE.

Message A may be transmitted using the PUSCH in the random access procedure other than the initial connection (for example, after RRC connection) In this case, the parameter information of the PUSCH used in the transmission of message A may be included in the RRC signaling to notify the UE.

The UE may select and apply one of the 2-step random access procedure that uses the PUSCH for the transmission of message A, and the 2-step random access procedure that uses another channel (for example, PRACH) for the transmission of message A. For example, the UE may determine the 2-step random access procedure to apply based on information (or configuration) from the base station. Alternatively, the UE may determine the 2-step random access procedure to apply based on capability information of the UE (for example, whether the 2-step random access procedure using the PUSCH is supported).

The UE may select and apply one of the 2-step random access procedure that uses the PUSCH for the transmission of message A and the 4-step random access procedure. For example, the UE may determine the random access procedure to apply based on information (or configuration) from the base station. Alternatively, the UE may determine the random access procedure to apply based on the capability information of the UE (for example, whether the 2-step random access procedure using the PUSCH is supported).

The UE may switch to the 4-step random access procedure and perform the random access procedure when the 2-step random access procedure fails (for example, when it is not successful even trying for a given number of times). The switch from the 2-step random access procedure to the 4-step random access procedure may be referred to as fall back. For example, when the transmission of message A using the PUSCH fails continuously a given number of times at the time of initial connection or after the RRC connection, the UE may control to transmit the PRACH. Note that the failure of the 2-step random access procedure here may be defined as response message B with respect to message A not being received over a given time interval after the transmission of the message A.

Thus, the random access operation can be simplified since the 2-step random access with fewer operation procedures is performed first, and even if the 2-step random access procedure fails, switch can be made to the 4-step random access procedure to perform.

### (Second Aspect)

In a second aspect, the transmission control of the configured grant-based PUSCH (for example, PUSCH not including message A) and the PUSCH used in the transmission of message A will be described. In the following description, a case where both the configured grant-based PUSCH and the 2-step RACK are configured for the UE is assumed, but this is not the sole case.

The UE may select one of the configured grant-based PUSCH transmission and the PUSCH transmission used for the 2-step RACH, based on whether a given timer is running (or in active). The configured grant-based PUSCH is used, for example, for the transmission of UL signals (for example, UL data, UL-SCH, and so on) other than message A. The PUSCH used for the 2-step RACH is used in the transmission of message A.

The given timer may be a timing advance timer used for timing adjustment of the UL. The timing advance timer may be referred to as a TA timer, a TAT, a time adjustment timer, or timeAlignmentTimer.

The TA timer may be a timer activated by a TA command included in the random access response (message 2 of 4-step RACH or message B of 2-step RACH). The UE controls the UL transmission, based on an activation state of the TA timer. The TA command is a command indicating a transmission timing value of an uplink channel, and is included in a MAC control element.

While the TA timer is in active (TA timer running), roughly two types of UL transmission may be defined. The first is the UL transmission dynamically scheduled for every TTI, and the second is the UL transmission semi-statically allocated according to the higher layer signaling.

When the TA timer expires (when a time measured by the TA timer is continued for a given time or longer), the uplink resource reserved for the UE is released, and the transmission of a given uplink channel is stopped. Note that the TA timer is started (initialized) every time the TA command is received.

The UE can perform the UL transmission (transmission of PUCCH, PUSCH, uplink measurement reference signal (SRS), and so on) with respect to a cell in which the TA timer has not expired. On the other hand, the UE may be configured such that the UL transmission other than the random access procedure (for example, message A) is restricted with respect to a cell in which the TA timer has expired. Note that when message A is transmitted in the cell in which the TA timer has expired, the UE may apply TA = 0 to transmit the PUSCH including message A.

In other words, the UE controls the UL transmission in each cell based on the configured TA timer, and does not perform transmission other than the random access procedure with respect to the cell in which the TA timer has expired. In this case, the timer may be configured to start again when receiving message B after the UE transmits message A, to perform the UL transmission other than the random access procedure.

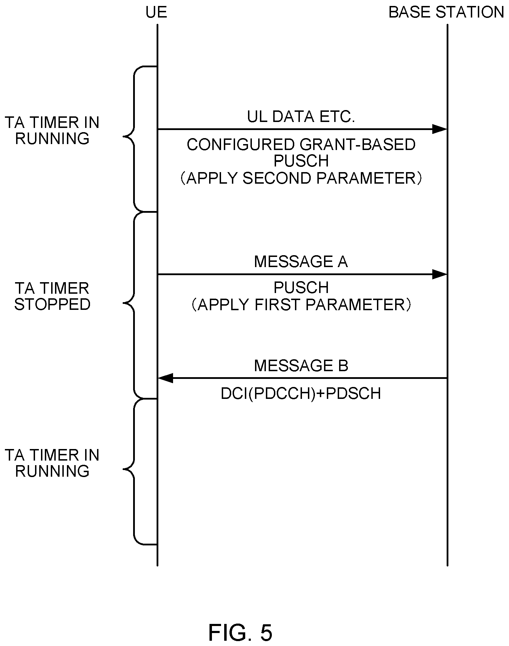

In a configuration in which the transmission of message A is performed using the PUSCH, for example, the UE transmits the configured grant-based PUSCH (or PUSCH configured with the first parameter) when the TA timer is running (see FIG. 5). The configured grant-based PUSCH may have a configuration of not including message A.

On the other hand, the UE transmits the PUSCH to use for the 2-step RACH (or PUSCH configured with the second parameter) when the TA timer is not running (for example, when expired) (see FIG. 5). In this case, the UE may autonomously transmit the PUSCH to use for the 2-step RACH when the TA timer is not running, and autonomously transmit the configured grant-based PUSCH when the TA timer is running. The 4-step RACH may be performed when the random access is performed while the TA timer is running.

Thus, the transmissions of a plurality of PUSCHs can be used properly by controlling the PUSCH type (or parameter to apply to the PUSCH) to transmit based on whether the TA timer is in active.

### (Third Aspect)

In a third aspect, repetition is applied to message A in the 2-step random access procedure.

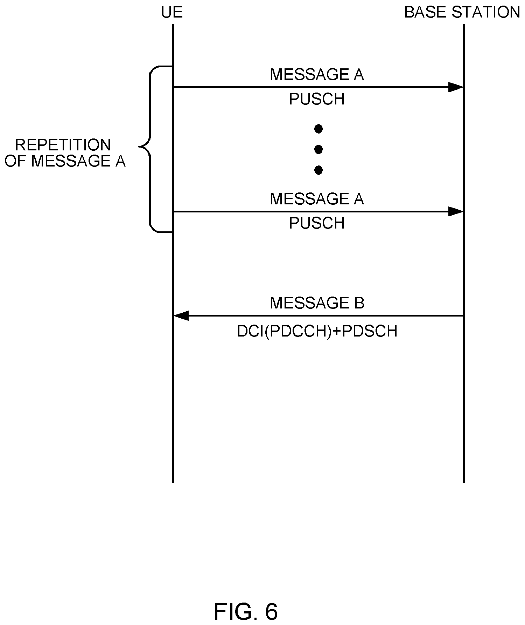

The UE may apply the repetition to message A (see FIG. 6). For example, the UE repeatedly transmits message A in successive time intervals. Each time interval may be at least one of a slot, a mini-slot, and a symbol. The mini-slot may be constituted with a given number of symbols.

The UE may use the PUSCH for the repetition of message A. The number of repetitions K (for example, rep-K) may be configured by at least one of the higher layer signaling and the DCI. The repetition of the PUSCH may be controlled similar to the repetition of the configured grant type 1. Note that the number of repetitions K (for example, rep-K) configured with respect to the PUSCH that performs the transmission of message A may be configured with a value different from the number of repetitions configured with respect to the PUSCH that does not perform the transmission of message A (for example, UL grant-based PUSCH, configured grant-based PUSCH).

When the time intervals are slots, the UE uses the PUSCH configured over a plurality of successive slots to transmit message A. When the time intervals are mini-slots, the UE uses the PUSCH configured over a plurality of successive OFDM symbol sets to transmit message A.

When the repetition of a given number of times (for example, K times) is configured, message B may be transmitted after all the repetitions are finished or message B may be transmitted before all the repetitions are finished. In the former case, the UE receives message B in a given period configured after the transmission of all the number of repetitions (K times). In the latter case, the UE may receive message B in a given period configured with respect to each repetition.

Thus, a transmission success probability of message A can be improved by applying the repetition to message A in the 2-step RACH.

### (Fourth Aspect)

In a fourth aspect, a configuration of a reception period of message B in the 2-step random access procedure will be described.

After transmitting message A, the UE receives message B which is a response signal of message A. For example, after transmitting message A, the UE detects message B in a given period, and may perform the transmission of message A again or perform a fallback to the 4-step random access procedure when message B is not detected.

The transmission of message B may be controlled using the DCI (or PDCCH) or the PDSCH scheduled by the DCI. The DCI (or PDCCH) may be CRC scrambled by a given RNTI (for example, RA-RNTI).

The given period in which the detection of message B is attempted may be referred to as a message B window or an RAR window. The given period may be configured for the UE by the higher layer signaling from the base station.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

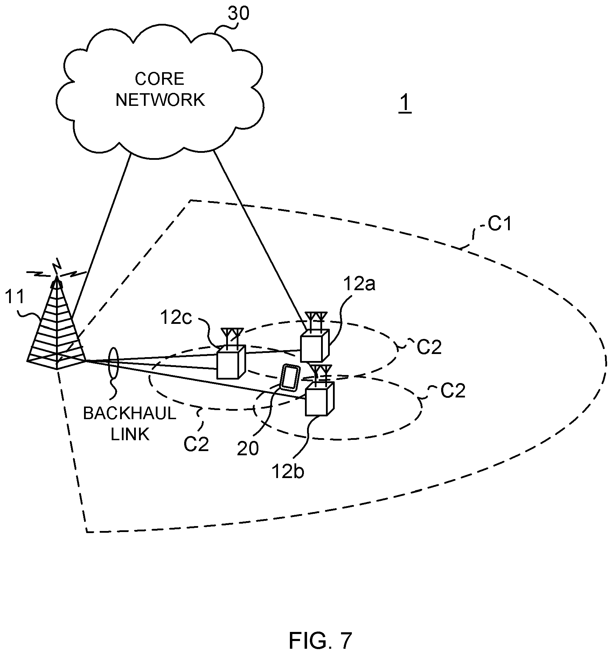

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on, the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number and so on of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

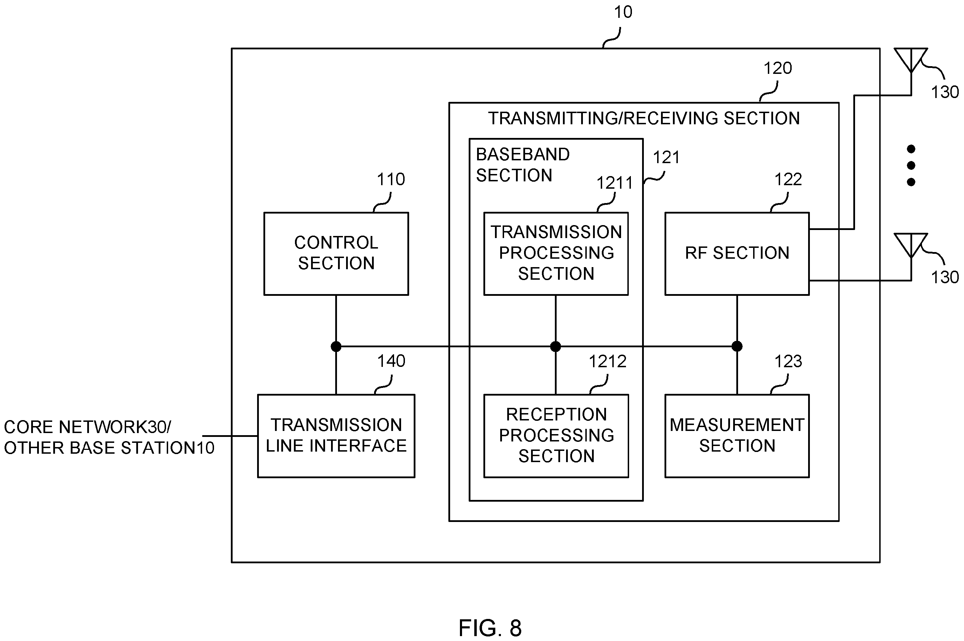

FIG. 8 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, and so on described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, and so on described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, and so on described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 receives a first message (for example, message A) in the 2-step random access procedure. The transmitting/receiving section 120 transmits a second message (for example, message B) transmitted in response to the first message (for example, message A).

The control section 110 controls the configuration of the parameters of the first message (for example, message A) in the 2-step random access procedure. The control section 110 separately configures the parameters for an uplink shared channel used in the transmission of the first message and the uplink shared channel used in the transmission of another UL signal. Alternatively, the control section 110 may apply at least either different parameter values or the different numbers of parameters, for the uplink shared channel used in the transmission of the first message and the uplink shared channel used in the transmission of another UL signal.

### (User Terminal)

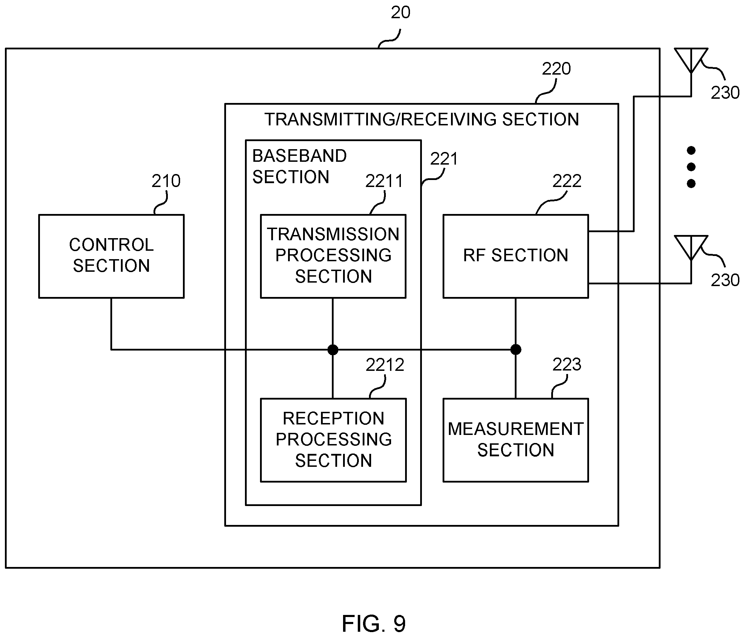

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, and so on described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, and so on described based on general understanding of the technical field to which the present disclosure pertains.

The transmitting/receiving section 220 may be structured as a transmitting/receiving section in one entity, or may be structured with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, and so on described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 performs the transmission of the first message (for example, message A) in the 2-step random access procedure by using the uplink shared channel. The transmitting/receiving section 220 receives a second message (for example, message B) transmitted in response to the UL signal.

The control section 210 may assume that the higher layer parameters are separately configured for the uplink shared channel used in the transmission of the first message and the uplink shared channel used in the transmission of another UL signal. Alternatively, the control section 210 may assume that at least either different parameter values or the different numbers of parameters is applied to the uplink shared channel used in the transmission of the first message and the uplink shared channel used in the transmission of another UL signal.

When application of the configured grant-based uplink shared channel and application of the 2-step random access procedure are configured, the control section 210 may determine the type of uplink shared channel to use for transmission based on whether or not a timing advance timer is running.

The control section 210 may apply repetition using continuous slots and continuous symbols to the first message using the uplink shared channel.

The control section 210 may apply repetition using continuous slots and continuous symbols to the first message using the uplink shared channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, and so on) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning and so on, but function are by no means limited to these. For example, functional block (components) to implement a function of transmission may be referred to as a "transmitting section (transmitting unit)," a "transmitter," and the like. The method for implementing each component is not particularly limited as described above.

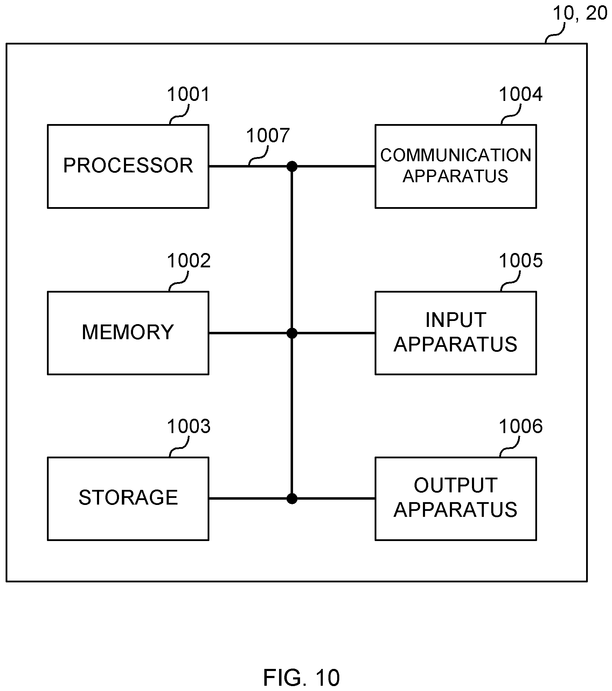

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules and so on for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, and so on are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane and so on), may be a moving object which moves unmanned (for example, a drone, an automatic operation car and so on), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor and so on.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G and so on) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, and so on.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that controls transmission of a first message in a 2-step random access procedure by using an uplink shared channel; and
a receiving section that receives a second message transmitted in response to the UL signal.

2. The user terminal according to claim 1, wherein
higher layer parameters are separately configured for an uplink shared channel used in transmission of the first message and an uplink shared channel used in transmission of another UL signal.

3. The user terminal according to claim 1 or 2, wherein
when application of a configured grant-based uplink shared channel and application of a 2-step random access procedure are configured, the control section determines type of uplink shared channel to use for transmission, based on whether or not a timing advance timer is running.

4. The user terminal according to any one of claims 1 to 3, wherein
the control section applies repeated transmission using continuous slots and continuous symbols with respect to the first message using the uplink shared channel.

5. The user terminal according to any one of claims 1 to 4, wherein
the control section determines a reception period of the second message, based on information configured by higher layer signaling.

6. A radio communication method comprising:
controlling transmission of a first message in a 2-step random access procedure by using an uplink shared channel; and
receiving a second message transmitted in response to the UL signal.
